# EUROPEAN PATENT APPLICATION

(11) **EP 2 520 491 A1**
(43) Date of publication of application: **07.11.2012**
(21) Application number: 10841122.4
(22) Date of filing: 29.10.2010
(51) Int. Cl.: B64D 11/06, B60N 2/01, B64D 47/02

(54) **AIRPLANE SEAT SYSTEM**

(30) Priority: 29.12.2009 KR 20090016957 U
(71) Applicant: Kim, Jong Jin, Seoul 150-751 (KR)
(72) Inventor: Kim, Jong Jin, Seoul 150-751 (KR)
(74) Representative: Tischner, Oliver
(86) International application number: PCT/KR2010/007565
(87) International publication number: WO 2011/081289

(57) **Abstract**

Provided is a convenient airplane seat system having a modified seat arrangement to reduce contact and interference between adjacent passengers. In the airplane seat system, a plurality of seats, each having a seat part, a backrest part, and armrests, are arranged in lines on a frame, and one line of seats is higher than other lines of seats by a predetermined length h, and said one line is further forward than the other lines of seats by a predetermined distance d.

## Description

### TECHNICAL FIELD

The present invention relates to an airplane seat system, and more particularly, to an airplane seat system for reducing inconvenience to seat users by modifying a seat arrangement system installed on an airplane.

### BACKGROUND ART

In general, a plurality of seats are arranged in lines in an airplane to hold as many passengers as possible in a limited space. A narrow space between seats causes much inconvenience to passengers.

In particular, unlike a business seat having a width of 55 cm, an economy seat having a width of 42 cm, taking a relatively narrow space, has a problem in that knees or shoulders may contact adjacent passengers.

For example, seats in an airplane are uniformly arranged in straight rows and columns. Mere effort to increase the size of a seat by changing from having three seats in a row to having two seats in a row was made to secure space to change a conventional space for economy seats to a space for business seats.

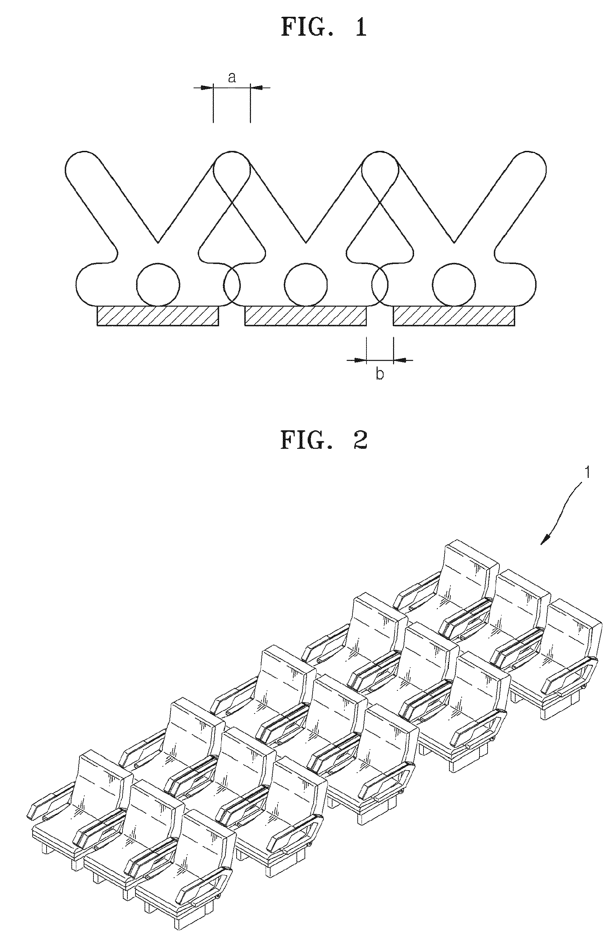

FIG. 1 is a plan view of a conventional airplane seat system. FIG. 2 is a perspective view illustrating the airplane seat system of FIG. 1.

As illustrated in FIGS. 1 and 2, when a passenger having wide shoulders sits on a seat, the passenger's shoulder may contact an adjacent passenger's shoulder due to a narrow width of a backrest of each seat.

Also, neighboring passengers' knees may contact each other due to the narrow seat width. Accordingly, when a passenger sits for a long time, stress is generated and fatigue is increased.

### DETAILED DESCRIPTION OF THE INVENTION

### TECHNICAL PROBLEM

The present invention provides an airplane seat system that may reduce contact and interference between neighboring passengers and increase convenience in use of seats by modifying a seat arrangement system in an airplane.

### TECHNICAL SOLUTION

According to an aspect of the present invention, there is provided an airplane seat system in which a plurality of seats are continuously arranged on an upper portion of a frame in rows, each seat comprising a seat part, a backrest part, and armrests, wherein some seats of the plurality of seats in a row are installed higher than the other seats by a predetermined height h, and the seats installed higher than the other seats of the plurality of seats by the predetermined height h are installed to be advanced forward from the other seats by a predetermined distance d.

The seats installed higher than the other seats of the plurality of seats by the predetermined height h may be installed on a protruding portion that protrudes from the frame by the predetermined height h.

Each seat of the plurality of seats in a row may have the same shape and size, and as some seats of the plurality of seats in a row are installed on the protruding portion that protrudes from the frame by the predetermined height h, the seats may be installed higher than the other seats of the plurality of seats by the predetermined height h.

One of the plurality of seats in a row that is arranged at a center may be installed higher than the other seats by the predetermined height h and simultaneously advanced forward by the predetermined distance d.

Three seats may be provided in a row, and a first seat arranged at a center of the three seats is installed higher than second seats arranged at left and right sides of the first seat, by the predetermined height h, and simultaneously advanced forward from the second seats by the predetermined distance d.

The first seat may be installed on a protruding portion that protrudes from the frame by the predetermined height h.

Four seats may be provided in a row, in which two first seats arranged at a center of the four seats are installed higher than two second seats arranged outside the first seats, by the predetermined height h, and simultaneously advanced forward from the second seats by the predetermined distance d.

The two first seats may be installed on a protruding portion that protrudes from the frame by the predetermined height h.

Five seats may be provided in a row, a first seat arranged at a center of the five seats may be installed higher than second seats arranged at left and right sides of the first seat, by a predetermined height h1, and simultaneously advanced forward from the second seats by a predetermined distance d1, and the second seats may be installed higher than third seats arranged outside the second seats, by a predetermined height h2, and simultaneously advanced forward from the third seats by a predetermined distance d2.

The airplane seat system may further include a first protruding portion protruding from the frame by the first height h1 and a second protruding portion protruding from the first protruding portion by the second height h2, and the first seat may be installed on the second protruding portion and the second seats may be installed on the first protruding portion.

The predetermined height h and the predetermined distance d each may be from 9 cm to 25 cm.

A space concave portion may be formed at a side surface of the protruding portion and an illumination lamp may be provided in the space concave portion.

Rows including the plurality of seats may be repeatedly arranged along a predetermined column.

### DESCRIPTION OF THE DRAWINGS

FIG. 1 is a plan view illustrating an arrangement state of a conventional airplane seat system.
FIG. 2 is a perspective view illustrating the airplane seat system of FIG. 1.
FIG. 3 is a perspective view illustrating an airplane seat system according to an embodiment of the present invention.
FIG. 4 is a rear view of the airplane seat system of FIG. 3.
FIG. 5 is a side view of the airplane seat system of FIG. 3.
FIG. 6 is a plan view illustrating a sitting state in the airplane seat system of FIG. 3.
FIG. 7 is a cross-sectional view of a frame in the airplane seat system of FIG. 3.
FIG. 8 is a perspective view illustrating an airplane seat system according to another embodiment of the present invention.
FIG. 9 is a rear view of the airplane seat system of FIG. 8.
FIG. 10 is a perspective view illustrating an airplane seat system according to another embodiment of the present invention.
FIG. 11 is a rear view of the airplane seat system of FIG. 10.
FIG. 12 is a side view of the airplane seat system of FIG. 10.

### BEST MODE

The attached drawings for illustrating exemplary embodiments of the present invention are referred to in order to gain a sufficient understanding of the present invention, the merits thereof, and the objectives accomplished by the implementation of the present invention. Hereinafter, the present invention will be described in detail by explaining exemplary embodiments of the invention with reference to the attached drawings. Like reference numerals in the drawings denote like elements

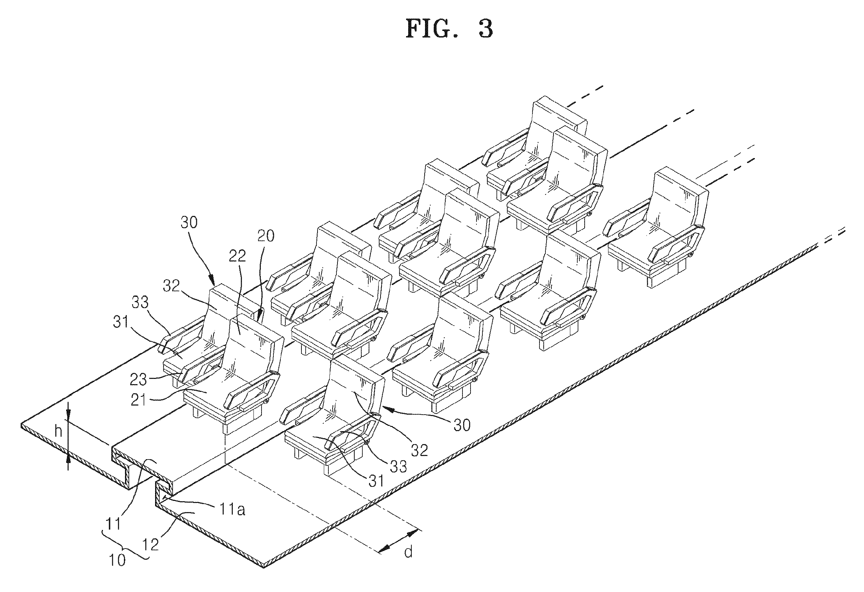

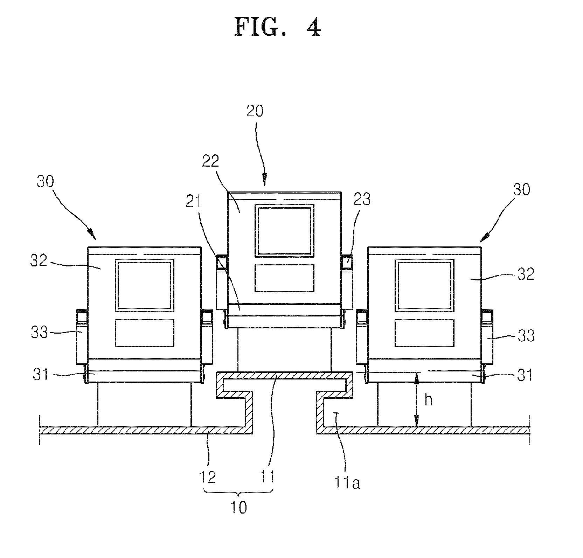

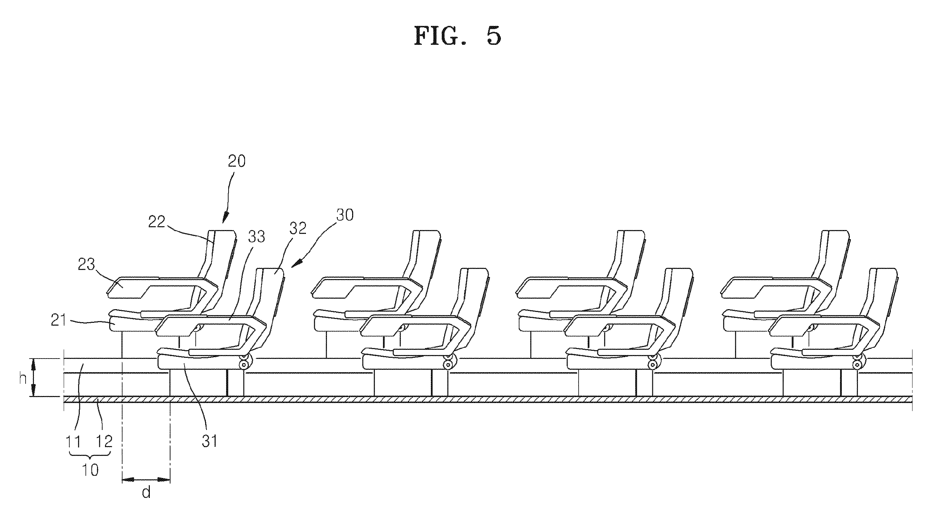

FIG. 3 is a perspective view illustrating an airplane seat system according to an embodiment of the present invention. FIG. 4 is a rear view of the airplane seat system of FIG. 3. FIG. 5 is a side view of the airplane seat system of FIG. 3.

First, a seat arrangement structure of an airplane seat system according to an embodiment of the present invention is described below with reference to FIG. 3 to 5.

For a general airplane seat, seats 20 and 30 are arranged in a row of three seats as a left window seat, a right window seat, and an alley seat. Each of the seats 20 and 30 includes a seat part 21 or 31 for a passenger to sit on, a backrest part 22 or 32 for supporting the back of a passenger, and armrests 23 or 33 for placing both arms of a passenger.

The airplane seat system according to the present embodiment includes a frame 10, a first seat 20 arranged on the frame 10, and second seats 30 arranged at left and right sides of the first seat 20.

The airplane seat system has a dual layer arrangement system in which the height of the first seat 20 located at the center is higher than those of the second seats 30 located at two sides of the first seat 20 by a predetermined height h of about 5-25 cm, preferably, about 12-15 cm. To this end, a protruding portion 11 is formed by protruding part of the frame 10 where the first seat 20 is installed by the predetermined height h. In other words, the frame 10 includes a flat portion 12 and the protruding portion 11 protruding from the flat portion 12 by the predetermined height h. As the first seat 20 is arranged on the protruding portion 11, the first seat 20 may be installed higher than the second seat 30 by the predetermined height h.

A space concave portion 11 a is formed in two sides of the protruding portion 11, thus, with the protruding portion 11 formed protruding by the predetermined height h, forming a T-shape cross-section. The space concave portion 11 a may be an extended space for placing the feet of a passenger sitting on the second seat 30 located at the left or right side of the first seat 20.

With such a dual layer arrangement, the first seat 20 located at the center is arranged at a position advanced forward from the second seats 30 at two sides of the first seat 20 by a predetermined distance d of about 5-25 cm. The distance d of the advancement may be preferably about 12-15 cm.

When the height h and the distance d each are less than 5 cm, a seat convenience improvement effect according to the adjustment of the height and distance is diminished. When the height h and the distance d each exceeds 25 cm, a passage for passengers is made inconvenient. Accordingly, it is preferably that the height h and the distance d each are within a range of 5-25 cm. Also, more preferably, when the height h and the distance d each are within a range between 9 cm and 25 cm, an optimal effect in improvement of seat convenience may be obtained.

Thus, it can be seen that the seats in the present embodiment make a combined arrangement form in which the first seat 20 at the center is arranged higher than the second seats 30 at two sides of the first seat 20 and simultaneously is advanced forward.

In other words, in the airplane seat system according to the present embodiment, the first seat 20 at the center is formed higher than the second seats 30 at two sides of the first seat 20 by a predetermined height, and simultaneously, the first seat 20 at the center formed higher than the second seats 30 is advanced forward from the second seats 30 by a predetermined distance. According to the arrangement, not only the upper bodies but also the legs of neighboring passengers do not overlap with each other and thus contact and interference between neighboring passengers in the center seat and the side seats may be reduced. Otherwise, for example, when the left and right seats are advanced forward from the center seat, a passenger in the center seat may feel inconvenienced. Also when the left and right seats are formed higher than the center seat, a passenger in the center seat may feel inconvenienced. To address these issues, in the airplane seat system according to the present embodiment, the first seat 20 at the center is formed higher than the second seats 30 at two sides of the first seat 20 by a predetermined height and simultaneously the first seat 20 at the center formed higher than the second seats 30 is advanced forward from the second seats 30 by a predetermined distance. Thus, convenience of not only a passenger in the center seat but also of passengers in the side seats may be improved.

Furthermore, in the airplane seat system according to the present embodiment, in order to form the first seat 20 at the center higher than the second seats 30 at two sides of the first seat 20 by a predetermined height h, rather than changing a design of a seat itself, the first seat 20 is installed on the protruding portion 11 protruding the predetermined height h from the flat portion 12 of the frame 10. In other words, in order to make the first seat 20 higher than the second seats 30 without changing the frame 10, the design of the first seat 20 itself needs to be changed. Thus, by arranging the first seat 20 on the protruding portion 11 protruding a predetermined height from the frame 10, an airplane seat that may provide a passenger with convenience may be provided without changing the design of the first seat 20. Also, since the first seat 20 is installed on the protruding portion 11 protruding a predetermined height from the frame 10, a passenger sitting on the first seat 20 may place their feet on the protruding portion 11 so that he/she may feel the same comfort as other passengers in different seats.

In the meantime, although one first seat 20 at the center rises up to protrude in the drawings according to the present embodiment, the present invention is not limited thereto and two or more seats may rise up to protrude, which is described below.

An operation and effect of the airplane seat arrangement according to the present embodiment is described below.

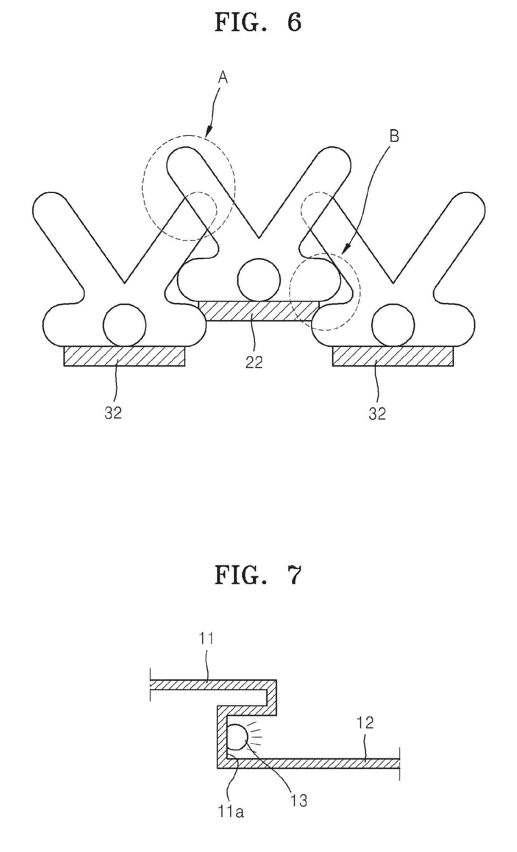

FIG. 6 is a plan view illustrating a sitting state in the airplane seat system of FIG. 3. It can be seen that a physical contact between a passenger sitting on the first seat 20 at the center and passengers sitting on the second seats 30 at the left and right sides of the first seat 20 is reduced. In other words, due to the difference in the height between the first seat 20 and the second seat 30 and the advanced arrangement of the first seat 20, the knees of neighboring passengers are at different heights and thus do not contact each other and also the shoulders of the passengers are arranged in a zigzag manner and thus the shoulders do not contact each other.

In FIG. 6, a portion A is where knees cross each other and a portion B is where shoulders cross each other. According to the present invention, the problem of inconvenience in the conventional economy seat shown in FIG. 1, that is, existence of a portion "a" where knees cross each other and a portion "b" where shoulders cross each other, is removed.

In other words, when the seats 20 and 30 are all occupied, a passenger sitting on the first seat 20 at the center is located higher than passengers sitting on the second seats 30 at the left and right sides of the first seat 20, by the predetermined height h, and simultaneously is advanced forward by the predetermined distance d from the second seats 30, thereby preventing the above-described physical contact.

In particular, the passengers sitting on the second seats 30 at the left and right sides of the first seat 20 may use the space of the spacer concave portion 11 a formed in a wall surface of the protruding portion 11 and thus a space for placing shoes is secured and a more comfortable sitting state may be provided.

Also, for long air flights, a passenger may take off their shoes and put them into the space concave portion 11 a and thus the space concave portion 11 a may be used as a receiving space.

Thus, when the seat arrangement according to the present invention is provided, contact between not only the shoulders and the knees but also between the shoes of neighboring passengers may be prevented.

FIG. 7 is a cross-sectional view of the frame 10 in the airplane seat system of FIG. 3. Referring to FIG. 7, an illumination lamp 13 is installed in the spacer concave portion 11 a. In other words, when the illumination lamp 13 is installed at a predetermined interval, light may be reflected by the frame 10 so that an internal indirect illumination effect on a floor surface may be obtained.

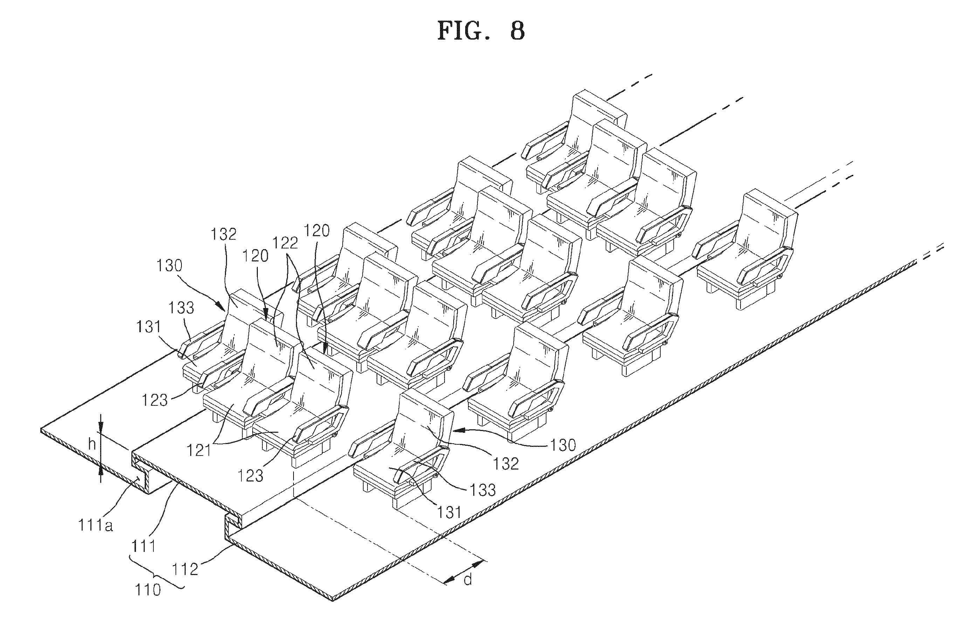

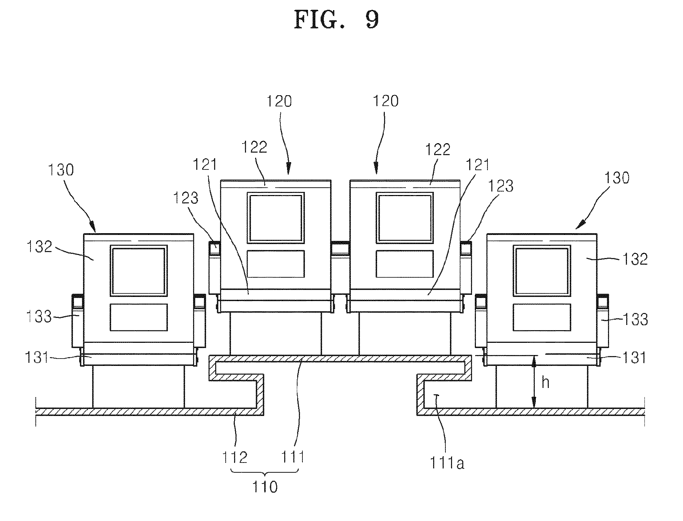

FIG. 8 is a perspective view illustrating an airplane seat system according to another embodiment of the present invention. FIG. 9 is a rear view of the airplane seat system of FIG. 8. Referring to FIGS. 8 and 9, the airplane seat system according to the present embodiment includes a frame 110, two first seats 120 arranged on the frame 110, and two second seats 130 arranged at left and right sides of the two first seats 120. The present embodiment is different from the above-described embodiment of FIG. 3 in that four seats are arranged in a row.

In this case, a protruding portion 111 is formed by extending part of a flat portion 112, and the two first seats 120 are arranged on the protruding portion 111 of the frame 110 and the two second seats 130 are arranged on the flat portion 112. Since the two first seats 120 are arranged on the protruding portion 111, which protrudes by a predetermined height h from the flat portion 112 of the frame 110, the first seats 120 are installed higher than the second seats 130 by the predetermined height h. Simultaneously, the first seats 120 located at the center are arranged at a position advanced forward from the second seats 130 by a predetermined distance d.

Accordingly, in the airplane seat system according to the present embodiment, contact between neighboring passengers may be reduced and thus convenience of passengers may be increased.

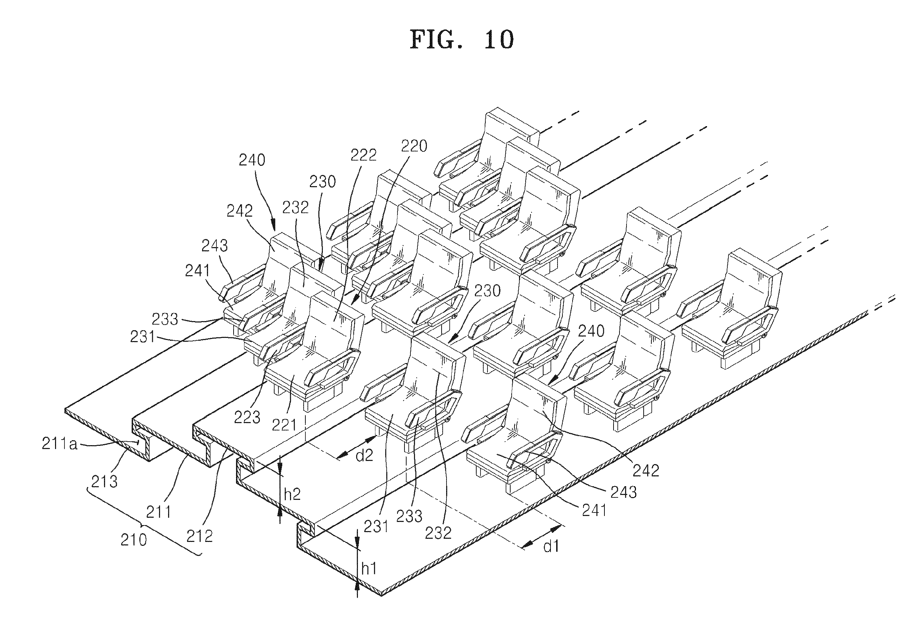

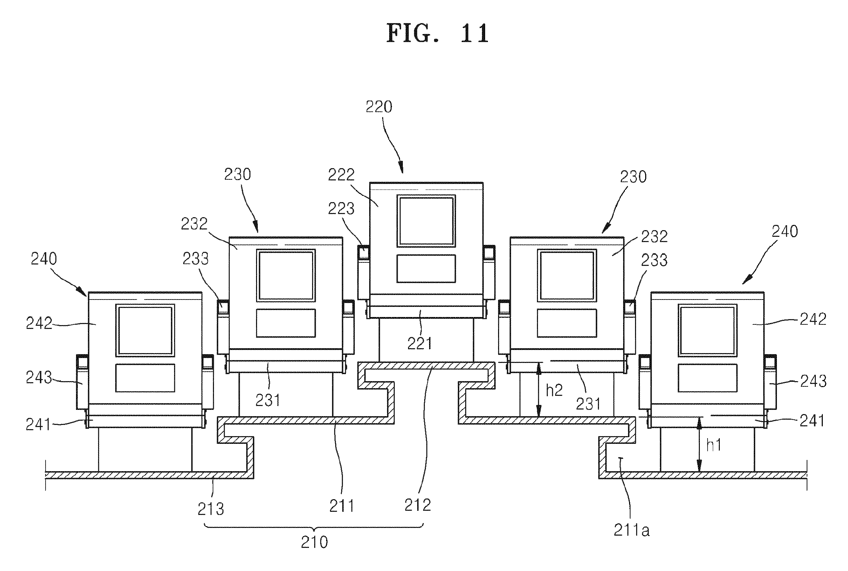

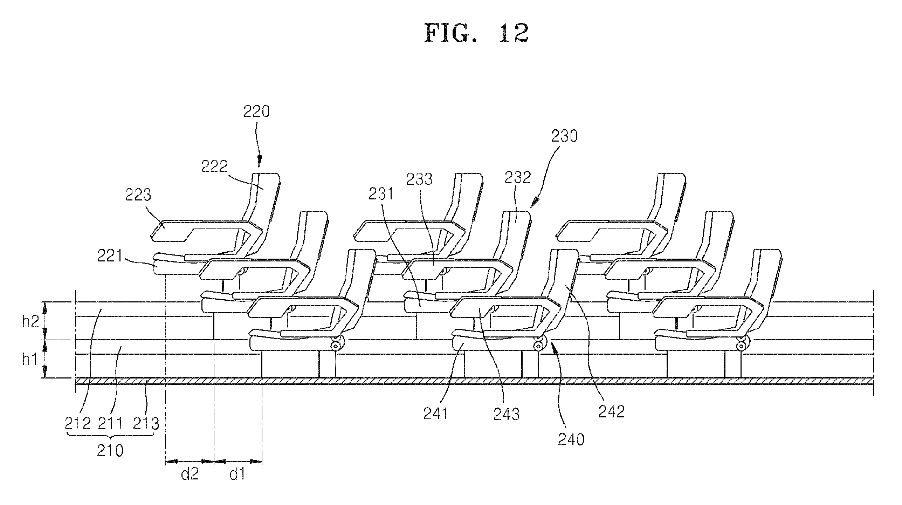

FIG. 10 is a perspective view illustrating an airplane seat system according to another embodiment of the present invention. FIG. 11 is a rear view of the airplane seat system of FIG. 10. FIG. 12 is a side view of the airplane seat system of FIG. 10.

Referring to FIGS. 10, 11, and 12, the airplane seat system according to the present embodiment includes a frame 210 having a first protruding portion 211 and a second protruding portion 212, a first seat 220 arranged at the center of all of five seats, two second seats 230 arranged at left and right sides of the first seat 220, and two third seats 240 arranged outside the second seats 230. The present embodiment is different from the above-described embodiment of FIG. 3 in that five seats are arranged in a row.

In this case, the frame 210 includes a flat portion 213, a first protruding portion 211 formed by extending part of the flat portion 213, and a second protruding portion 212 formed by extending part of the first protruding portion 211. The first seat 220 is arranged on the second protruding portion 212, the two second seats 230 are arranged on the first protruding portion 211, and the two third seats 240 are arranged on the flat portion 213.

Since the two second seats 230 are arranged on the first protruding portion 211, which protrudes by a predetermined height h1 from the flat portion 213, the second seats 230 are installed higher than the third seats 240 by the predetermined height h1. Simultaneously, the second seats 230 are arranged at a position advanced forward from the third seats 240 by a predetermined distance d1.

Also, since the first seat 220 is arranged on the second protruding portion 212, which protrudes by a predetermined height h2 from the first protruding portion 211, the first seat 220 are installed higher than the second seats 230 by the predetermined height h2. Simultaneously, the first seat 220 is arranged at a position advanced forward from the second seats 230 by a predetermined distance d2.

Accordingly, in the airplane seat system according to the present embodiment, contact between neighboring passengers may be reduced and thus convenience of passengers may be increased.

As described above, according to the present invention, since a limited seat space is used as wide as possible, contact between neighboring passengers may be reduced and thus a space of an economy seat may be changed to a comfortable space like that of a business seat and also convenience of passengers may be increased.

In particular, since a combined arrangement structure of airplane seats having different heights and different forward and backward positions is available, usability of a space in an airplane is improved.

Furthermore, since the space concave portion is formed at two sides of the protruding portion of the frame, an indirect illumination effect on a floor may be obtained or small belongings such as shoes may be kept therein.

In addition to the above-described embodiments and illustrations, it is obvious that the seat arrangement structure of the present invention may be variously modified by those skilled in the art. For example, although seats are arranged in a row of three, four, or five seats in the above embodiments, the present invention may be applied to any seat arrangement structure of more than five seats in a row.

While this invention has been particularly shown and described with reference to exemplary embodiments thereof, it will be understood by those skilled in the art that various changes in form and details may be made therein without departing from the spirit and scope of the invention as defined by the appended claims.

### [List of reference numerals]

| | | | |
|---|---|---|---|
| 10: | frame | 11: | protruding portion |
| 11 a: | space concave portion | 12: | flat portion |
| 13: | illumination lamp | 20, 30: | seat |
| 21, 31: | seat part | 22, 32: | backrest part |
| 23, 33: | armrests | | |

## Claims

1. An airplane seat system in which a plurality of seats are continuously arranged on an upper portion of a frame in rows, each seat comprising a seat part, a backrest part, and armrests,
wherein some seats of the plurality of seats in a row are installed higher than the other seats by a predetermined height h, and the seats installed higher than the other seats of the plurality of seats by the predetermined height h are installed to be advanced forward from the other seats by a predetermined distance d.

2. The airplane seat system of claim 1, wherein the seats installed higher than the other seats of the plurality of seats by the predetermined height h are installed on a protruding portion that protrudes from the frame by the predetermined height h.

3. The airplane seat system of claim 2, wherein each seat of the plurality of seats in a row has the same shape and size, and as some seats of the plurality of seats in a row are installed on the protruding portion that protrudes from the frame by the predetermined height h, the seats are installed higher than the other seats of the plurality of seats by the predetermined height h.

4. The airplane seat system of claim 1, wherein one of the plurality of seats in a row that is arranged at a center is installed higher than the other seats by the predetermined height h and simultaneously advanced forward by the predetermined distance d.

5. The airplane seat system of claim 1, wherein three seats are provided in a row, and a first seat arranged at a center of the three seats is installed higher than second seats arranged at left and right sides of the first seat, by the predetermined height h, and simultaneously advanced forward from the second seats by the predetermined distance d.

6. The airplane seat system of claim 5, wherein the first seat is installed on a protruding portion that protrudes from the frame by the predetermined height h.

7. The airplane seat system of claim 1, wherein four seats are provided in a row, in which two first seats arranged at a center of the four seats are installed higher than two second seats arranged outside the first seats, by the predetermined height h, and simultaneously advanced forward from the second seats by the predetermined distance d.

8. The airplane seat system of claim 7, wherein the two first seats are installed on a protruding portion that protrudes from the frame by the predetermined height h.

9. The airplane seat system of claim 1, wherein five seats are provided in a row,
a first seat arranged at a center of the five seats is installed higher than second seats arranged at left and right sides of the first seat, by a predetermined height h1, and simultaneously advanced forward from the second seats by a predetermined distance d1, and
the second seats are installed higher than third seats arranged outside the second seats, by a predetermined height h2, and simultaneously advanced forward from the third seats by a predetermined distance d2.

10. The airplane seat system of claim 9, further comprising a first protruding portion protruding from the frame by the first height h1 and a second protruding portion protruding from the first protruding portion by the second height h2, and
the first seat is installed on the second protruding portion and the second seats are installed on the first protruding portion.

11. The airplane seat system of claim 1, wherein the predetermined height h and the predetermined distance d each are from 9 cm to 25 cm.

12. The airplane seat system of claim 2, wherein a space concave portion is formed at a side surface of the protruding portion and an illumination lamp is provided in the space concave portion.

13. The airplane seat system of claim 1, wherein rows including the plurality of seats are repeatedly arranged along a predetermined column.
